# EUROPEAN PATENT APPLICATION

(11) **EP 4 793 637 A1**
(43) Date of publication of application: **19.08.2026**
(21) Application number: 26151465.7
(22) Date of filing: 13.01.2026
(51) Int. Cl.: G01N 23/046

(54) **SCANNING APPARATUS AND METHOD FOR DETERMINING GRAIN STRUCTURE IN A COMPONENT**

(30) Priority: 12.02.2025 GB 202502054
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method (200) for determining grain structure in a component (102) includes disposing the component (102) on a support platform (110). The method (200) includes generating an imaging beam (106). The method (200) includes rotating and/or revolving an imaging beam source (104) and an imaging beam receiver (108) relative to the support platform (110). The method (200) includes acquiring, during the rotation and/or revolution a plurality of projections (116) each taken at the imaging beam receiver (108). The method (200) includes performing reconstruction, by a processor (114), of first projections (116-1) and second projections (116-2) from the plurality of projections (116) to obtain a first three-dimensional image (120) and at least one second three-dimensional image (122). The first projections (116-1) are acquired in at least one first angular range (AR1) and the second projections (116-2) are acquired in at least one second angular range (AR2).

## Description

### FIELD

This invention relates to a method for determining grain structure in a component, and in particular, to a scanning apparatus for determining grain structure in a component.

### BACKGROUND

X-ray scans such as computed tomography (CT) scans are conventionally used in industry for detecting defects such as voids, cracks, and inclusions, based on differences in X-ray absorption in these regions. CT techniques can also be used for investigative work on subjects such as aerofoil blades, and in particular, turbine blades of gas turbine engines. Computed tomography (CT) techniques have become a widely utilized technique for non-destructive evaluation of biological and non-biological samples. CT scanning is an imaging technique used to obtain detailed images of a component. In particular, CT may be used to produce three-dimensional (3D) representations of a component. This may be useful for performing detailed internal inspection of the component, which may be a component of a turbomachine, such as a gas turbine engine. CT scanning may use X-rays and gamma rays to produce an image of the component. To produce a 3D model, 2D images of the component are taken from multiple angles and the images are computationally combined. 3D CT is an emerging technology for the inspection of dense metal parts such as those produced by additive manufacturing that can have non-line of sight surfaces and cannot be inspected by other methods.

An x-ray source produces polychromatic (or monochromatic if the source is capable of doing so) x-rays that penetrate a part and form an x-ray image on a detector. The objects are (usually) rotated through 360 degrees (although partial angle and 180-degree scans do exist) while being imaged multiple times. The x-ray images are combined via a process called reconstruction to produce a 3D representation of the objects. Surface determination is then performed to separate the object's volume from the background. Subsequently, cross sections of the object may be viewed by the user.

Further, grain orientation in a crystalline material can also influence the interaction of x-rays with the component, which forms foundation for techniques such as X-ray diffraction (XRD) and transmission Laue. These techniques facilitate grain orientation measurement. However, these techniques require a highly collimated, preferably monochromatic X-ray source, thereby limiting its accessibility and broader applicability. Therefore, an efficient and accessible solution for 3D grain mapping and crystallographic orientation characterization is desired.

### SUMMARY

In a first aspect, a method for determining grain structure in a component by scanning the component in a scanning apparatus is provided. The method includes disposing the component on a support platform of the scanning apparatus, such that the component is positioned between an imaging beam source and an imaging beam receiver of the scanning apparatus. The imaging beam source and the imaging beam receiver are oppositely disposed to either side of the support platform. The method further includes generating, by the imaging beam source, an imaging beam that passes through the component. The method further includes rotating and/or revolving the imaging beam source and the imaging beam receiver relative to the support platform about one or more axes. The method further includes acquiring, during the rotation and/or revolution, a plurality of projections each taken at the imaging beam receiver. The method further includes performing reconstruction, by a processor, of first projections from the plurality of projections to obtain a first three-dimensional image of the component. The first projections are acquired in at least one first angular range of the rotation and/or revolution. The method further includes performing reconstruction, by the processor, of second projections from the plurality of projections to obtain at least one second three-dimensional image of the component. The second projections are acquired in at least one second angular range of the rotation and/or revolution. The at least one second angular range is different from the at least one first angular range. The method further includes comparing, by the processor, the first three-dimensional image and the at least one second three-dimensional image. The method further includes determining, based on the comparison, the grain structure in the component.

As the reconstruction of the first projections and the reconstruction of the second projections are performed at different angular ranges (i.e., the at least one first angular range and the at least one second angular range) of rotation and/or revolution, there would be a difference in intensity of scan (i.e., image) obtained because of variation in imaging beam attenuation due to grain orientation. Therefore, by comparing the first three-dimensional image and the at least one second three-dimensional image, the difference in intensity of the scan (i.e., scan quality) is analysed. This difference in the intensity of the scan may appear as a difference in material density of the component as the difference in projection intensity will depend on the materials since the scan parameters are same. Accordingly, variation in grain boundary/orientation may be identified. Therefore, the method of the present invention may provide a detailed information about the grain structure of the component, thereby enabling a precise measurement of relative orientation of grains within the component. This may facilitate a non-destructive imaging of the grain structure of the component.

In some embodiments, determining the grain structure in the component includes determining a difference in grain orientation in the component. Specifically, a difference in contrast may be provided between the differently oriented grains, which denotes the difference in grain orientation in the component. Therefore, the method of the present invention may help in identifying a variation in material densities, which may subsequently enable identification of grain boundaries and quantification of the grain orientation differences within the component.

In some embodiments, the first projections are acquired at uniformly separated angles within the at least one first angular range.

In some embodiments, the first projections are acquired at non-uniformly separated angles within the at least one first angular range.

It depends on application requirements that whether the first projections will be acquired at uniformly separated angles or non-uniformly separated angles within the at least one first angular range.

In some embodiments, every two adjacent angles in the at least one first angular range are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees. The two adjacent angles in the at least one first angular range of rotation and/or revolution may be separated by as low as 0.036 degrees.

In some embodiments, the second projections are acquired at uniformly separated angles within the at least one second angular range.

In some embodiments, the second projections are acquired at non-uniformly separated angles within the at least one second angular range.

In some embodiments, every two adjacent angles in the at least one second angular range are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees. The two adjacent angles in the at least one second angular range of rotation and/or revolution may be separated by as low as 0.036 degrees.

In some embodiments, acquiring the plurality of projections further includes collecting data samples of imaging beam attenuation by the component. Data samples of imaging beam attenuation may provide detailed information about material density, which may ensure accurate representation of internal structure of the component.

In some embodiments, performing reconstruction of the first projections and reconstruction of the second projections further include performing a filtered back projection reconstruction algorithm, an FDK reconstruction algorithm, an iterative reconstruction algorithm, a weighting reconstruction algorithm, or a combination thereof on the respective first projections and the second projections. In some applications, using such reconstruction algorithms may reduce the time for obtaining the first three-dimensional image and the second three-dimensional image of the component.

In some embodiments, the at least one first angular range includes a single first angular range or two or more first angular ranges separated from one another. This selection is done based on application requirements. The two or more first angular ranges may be separated from one another by at least 5 degrees, at least 10 degrees, at least 15 degrees, at least 25 degrees, at least 45 degrees, or at least 90 degrees.

In some embodiments, the single first angular range is 180 degrees or 270 degrees or 360 degrees. In case of the first angular range being 360 degrees, the projections are collected from all possible angles, thereby providing a detailed and complete information of the component which may make the scanning more reliable. Further, in case of the first angular range being 180 degrees or 270 degrees, the scanning time may be significantly reduced, which makes the scanning process more efficient.

In some embodiments, the at least one second angular range includes a single second angular range or two or more second angular ranges separated from one another. This selection is done based on application requirements. The two or more second angular ranges may be separated from one another by at least 5 degrees, at least 10 degrees, at least 15 degrees, at least 25 degrees, at least 45 degrees, or at least 90 degrees.

In some embodiments, generating the imaging beam further includes generating, by the imaging beam source, an x-ray beam, a gamma-ray beam, or any electromagnetic beam that is capable of passing through the component.

In a second aspect, a scanning apparatus for determining grain structure in a component is provided. The scanning apparatus includes an imaging beam source configured to generate an imaging beam that passes through the component. The scanning apparatus further includes an imaging beam receiver configured to receive the imaging beam, such that the component is disposed between the imaging beam source and the imaging beam receiver. The imaging beam receiver is configured to generate one or more images in response to receiving the imaging beam. The scanning apparatus further includes a support platform configured to support the component. The imaging beam source and the imaging beam receiver are configured to rotate and/or revolve relative to the support platform about one or more axes to allow generation of the one or more images. The scanning apparatus further includes a processor communicably coupled to the imaging beam receiver. The processor is configured to acquire, during the rotation and/or revolution, a plurality of projections each taken at the imaging beam receiver. The processor is further configured to perform reconstruction of first projections from the plurality of projections to obtain a first three-dimensional image of the component. The first projections are acquired in at least one first angular range of the rotation and/or revolution. The processor is further configured to perform reconstruction of second projections from the plurality of projections to obtain at least one second three-dimensional image of the component. The second projections are acquired in at least one second angular range of the rotation and/or revolution. The at least one second angular range is different from the at least one first angular range. The processor is further configured to compare the first three-dimensional image and the at least one second three-dimensional image. The processor is further configured to determine, based on the comparison, the grain structure in the component.

As the processor performs reconstruction of the first projections and the reconstruction of the second projections in the different angular ranges (i.e., the at least first angular range and the at least second angular range) of rotation and/or revolution, there would be a difference in intensity of scan (i.e., image) obtained because of variation in imaging beam attenuation due to grain orientation. Therefore, by comparing the first three-dimensional image and the at least one second three-dimensional image, the difference in the intensity of the scan (i.e., scan quality) is analysed. This difference in intensity of the scan may appear as a difference in material density of the component as the difference in projection intensity will depend on the materials since the scan parameters are same. Accordingly, variation in grain boundary/orientation may be identified. This may enable the scanning apparatus of the present invention to provide a detailed information about the grain structure of the component, thereby enabling a precise measurement of relative orientation of grains within the component. Hence, the scanning apparatus of the present invention may facilitate a non-destructive imaging of the grain structure in the component.

In some embodiments, the processor is further configured to determine the difference in grain orientation in the component based on the grain structure in the component. The processor of the scanning apparatus may determine presence of materials of different densities based on the difference in grain orientation in the component. In other words, a difference in contrast may be provided between the differently oriented grains, which denotes the difference in grain orientation in the component. Therefore, the scanning apparatus of the present invention may help in identifying a variation in material densities, which may enable identification of grain boundaries and quantification of the grain orientation differences within the component.

In some embodiments, the first projections are acquired at uniformly separated angles within the at least one first angular range.

In some embodiments, the first projections are acquired at non-uniformly separated angles within the at least one first angular range.

In some embodiments, the second projections are acquired at uniformly separated angles within the at least one second angular range.

In some embodiments, the second projections are acquired at non-uniformly separated angles within the at least one second angular range.

In some embodiments, the at least one first angular range includes a single first angular range or two or more first angular ranges separated from one another. This selection is done based on application requirements. The two or more first angular ranges may be separated from one another by at least 5 degrees, at least 10 degrees, at least 15 degrees, at least 25 degrees, at least 45 degrees, or at least 90 degrees.

In some embodiments, the single first angular range is 180 degrees or 360 degrees. In case of the first angular range being 360 degrees, the projections are collected from all possible angles, thereby providing a detailed and complete information of the component which may make the scanning more reliable. Further, in case of the first angular range being 180 degrees or 270 degrees the scanning time may be significantly reduced, which makes the scanning process more efficient.

In some embodiments, the at least one second angular range includes a single second angular range or two or more second angular ranges separated from one another. This selection is done based on application requirements. The two or more second angular ranges may be separated from one another by at least 5 degrees, at least 10 degrees, at least 15 degrees, at least 25 degrees, at least 45 degrees, or at least 90 degrees.

In some embodiments, the component is a component of a gas turbine engine. In some embodiments, the component is a turbine blade or a compressor blade of a gas turbine engine. In other embodiments, the component may be some other component of the gas turbine engine.

In a third aspect, a method for determining a difference in grain orientation in a component by scanning the component in a scanning apparatus is provided. The method includes disposing the component on a support platform of the scanning apparatus, such that the component is positioned between an imaging beam source and an imaging beam receiver of the scanning apparatus. The imaging beam source and the imaging beam receiver are oppositely disposed to either side of the support platform. The method further includes generating, by the imaging beam source, an imaging beam that passes through the component. The method further includes rotating and/or revolving the imaging beam source and the imaging beam receiver relative to the support platform about one or more axes. The method further includes acquiring, during the rotation and/or revolution, a plurality of projections each taken at the imaging beam receiver at different angles of rotation and/or revolution to produce a projection data set. The projection data set includes collected data samples of imaging beam attenuation by the component. The method further includes comparing, by a processor, the projection data set with a reference data set. The reference data set includes reference data samples of imaging beam attenuation by the component. The reference data set is previously stored in a memory of the processor. The method further includes determining the difference in grain orientation in the component based on the comparison of the projection data set with the reference data set.

By comparing the collected data samples of imaging beam attenuation with the reference data samples of imaging beam attenuation by the component, the method of the third aspect of the present invention may enable detection of difference in imaging beam attenuation caused by variation in material density of the component. Accordingly, variation in grain boundary/orientation may be identified. This may eliminate a need of performing multiple reconstructions of the different projections of the component, thereby making the process simpler and faster by reducing computational complexity.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, in which:
**FIG. 1** shows a schematic sectional side view of a gas turbine engine;
**FIG. 2** is a schematic view of a scanning apparatus for determining grain structure in a component, in accordance with an embodiment of the present invention;
**FIG. 3** is a schematic view of the scanning apparatus illustrating collection of first projections in an exemplary at least one first angular range;
**FIG. 4** is a schematic view of the scanning apparatus illustrating collection of second projections in an exemplary at least one second angular range;
**FIG. 5** is a flowchart of a method for determining grain structure in a component by scanning the component in a scanning apparatus; and
**FIG. 6** is a flowchart of a method for determining a difference in grain orientation in a component by scanning the component in a scanning apparatus.

The following table lists the reference numerals used in the drawings with the features to which they refer:

| Ref no. | Feature | FIG. |
|---|---|---|
| 10 | Gas Turbine Engine | 1 |
| 11 | Air Intake | 1 |
| 12 | Compressive Fan | 1 |
| 13 | Intermediate Pressure Compressor (IPC) | 1 |
| 14 | High-Pressure Compressor (HPC) | 1 |
| 15 | Combustion Equipment | 1 |
| 16 | High-Pressure Turbine (HPT) | 1 |
| 17 | Intermediate Pressure Turbine (IPT) | 1 |
| 18 | Low Pressure Turbine (LPT) | 1 |
| 19 | Core Exhaust Nozzle | 1 |
| 21 | Nacelle | 1 |
| 22 | Bypass Duct | 1 |
| 23 | Bypass Exhaust Nozzle | 1 |
| 100 | Scanning Apparatus | 2 3 4 |
| 102 | Component | 23 |
| 104 | Imaging Beam Source | 2 |
| 106 | Imaging Beam | 234 |
| 108 | Imaging Beam Receiver | 234 |
| 110 | Support Platform | 2 |
| 112 | Image | 2 |
| 114 | Processor | 2 3 4 |
| 116 | Projection(s) | 2 |
| 116-1 | First Projection(s) | 3 |
| 116-2 | Second Projection(s) | 4 |
| 120 | First Three-Dimensional Image | 3 |
| 122 | Second Three-Dimensional Image | 4 |
| 200 | Method | 5 |
| 202 | Step | 5 |
| 204 | Step | 5 |
| 206 | Step | 5 |
| 208 | Step | 5 |
| 210 | Step | 5 |
| 212 | Step | 5 |
| 214 | Step | 5 |
| 216 | Step | 5 |
| 300 | Method | 6 |
| 302 | Step | 6 |
| 304 | Step | 6 |
| 306 | Step | 6 |
| 308 | Step | 6 |
| 310 | Step | 6 |
| 312 | Step | 6 |
| A | First (bypass) air flow | 1 |
| B | Second (core) air flow | 1 |
| AR1 | First Angular Range | 3 |
| AR1-1 | First Angular Range | 3 |
| AR1-2 | First Angular Range | 3 |
| AR1-3 | First Angular Range | 3 |
| AR2 | Second Angular Range | 4 |
| AR2-1 | Second Angular Range | 4 |
| AR2-2 | Second Angular Range | 4 |
| X-X' | Principal Rotational Axis | 1 |

### DETAILED DESCRIPTION

Aspects and embodiments of the present invention will now be discussed with reference to the accompanying Figures. Further aspects and embodiments will be apparent to those skilled in the art.

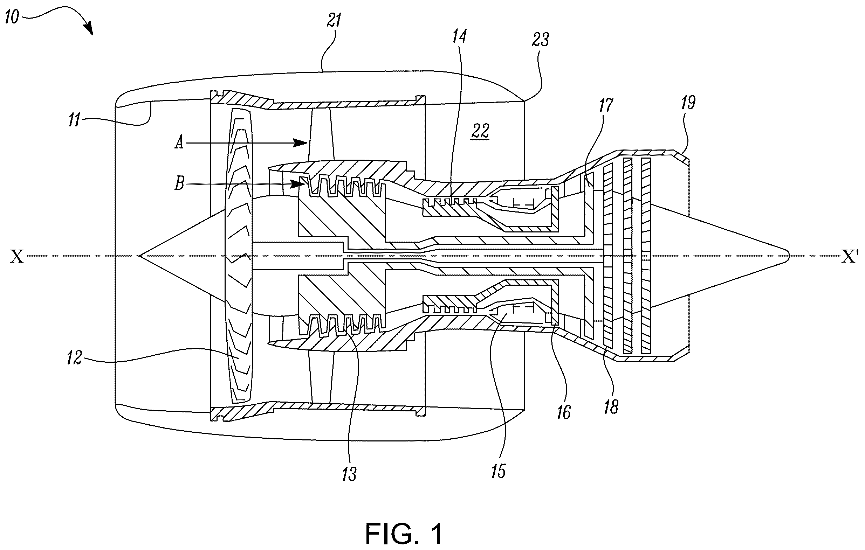

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

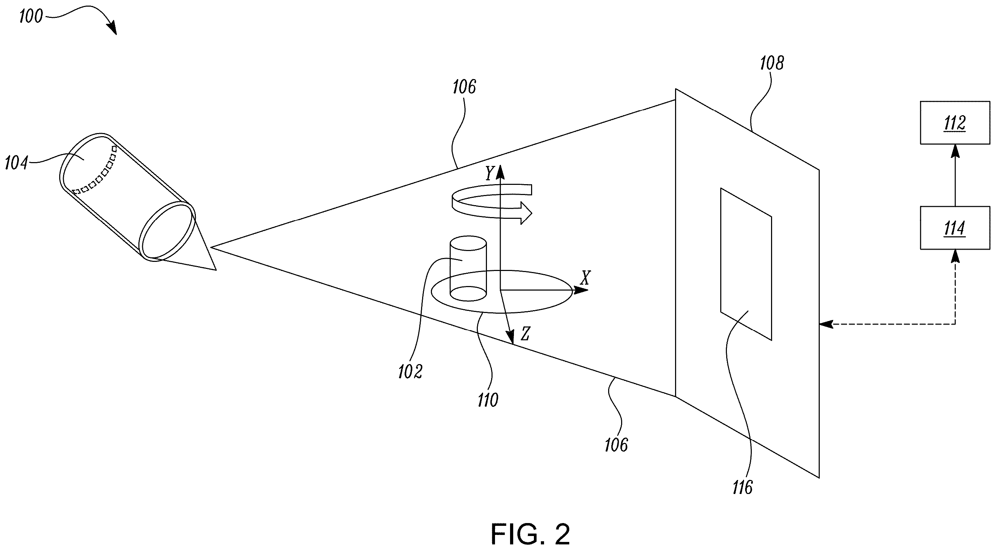

**FIG. 2** is a schematic view of a scanning apparatus 100 for determining grain structure in a component 102, according to an embodiment of the present invention. The scanning apparatus 100 performs a computational tomography (CT), preferably a three-dimensional CT, of the component 102. In general, 3D CT scanning generates a three-dimensional (3D) image of a component by utilizing a plurality of two-dimensional (2D) x-ray images taken around an axis of rotation and/or revolution. In some embodiments, the component 102 is a component of the gas turbine engine 10 (shown in FIG. 1). The component 102 may be a turbine blade or a compressor blade of the gas turbine engine 10.

In some embodiments, the component 102 may be some other component of the gas turbine engine 10. In other embodiments, the component 102 is a part of another prime mover or a machine. In some embodiments, the component 102 is metallic. The component 102 is shown schematically in FIG. 2 for the purpose of illustration. Other shapes and designs for the component 102 are foreseeable and could be used. In the illustrated embodiment of FIG. 2, only one component is shown. However, the scanning apparatus 100 may be used for scanning two or more components together.

Further, the scanning apparatus 100 includes an imaging beam source 104 configured to generate an imaging beam 106 that passes through the component 102. In some embodiments, the imaging beam source 104 generates an x-ray beam, a gamma-ray beam, or any electromagnetic beam that is capable of passing through the component 102. In other words, the imaging beam source 104 is an electromagnetic source, such as an x-ray source or a gamma-ray source. Specifically, the imaging beam source 104 is capable of emitting the imaging beam 110 in the electromagnetic spectrum that can penetrate or be transmitted through a material after attenuation. In some embodiments, the imaging beam source 104 is an x-ray source emitting x-ray beam.

The scanning apparatus 100 further includes an imaging beam receiver 108 configured to receive the imaging beam 106, such that the component 102 is disposed between the imaging beam source 104 and the imaging beam receiver 108. The imaging beam receiver 108 receives the imaging beam 106 that is attenuated after passing through the component 102. The imaging beam receiver 108 is configured to generate one or more images 112 in response to receiving the imaging beam 106. In some embodiments, the imaging beam receiver 108 generates an electrical signal (i.e., the x-ray signal) representing an intensity of the impinging x-ray beam, and hence, the attenuated x-ray beam.

Further, the scanning apparatus 100 includes a support platform 110 configured to support the component 102. The imaging beam source 104 and the imaging beam receiver 108 are configured to rotate and/or revolve relative to the support platform 110 about one or more axes to allow generation of the one or more images 112.

The scanning apparatus 100 further includes a processor 114 communicably coupled to the imaging beam receiver 108. In some embodiments, the processor 114 is a part of the scanning apparatus 100 and located onboard thereof. Alternatively, the processor 114 may be a separate programmable analog and/or digital device that can store, retrieve, and process data. In other words, the processor 114 may not be a part of the scanning apparatus 100. In an application, the processor 114 may be a controller, a control circuit, a computer, a workstation, a microprocessor, a microcomputer, a central processing unit, a server, or any suitable device or apparatus.

The processor 114 is configured to acquire, during the rotation and/or revolution, a plurality of projections 116 each taken at the imaging beam receiver 108. In other words, during the rotation and/or revolution, the processor 114 is configured to acquire data samples of imaging beam attenuation by the component 102. Further, projections from the imaging beam receiver 108 may then be reconstructed and processed in the processor 114 in a manner known per se to produce one or more images 112.

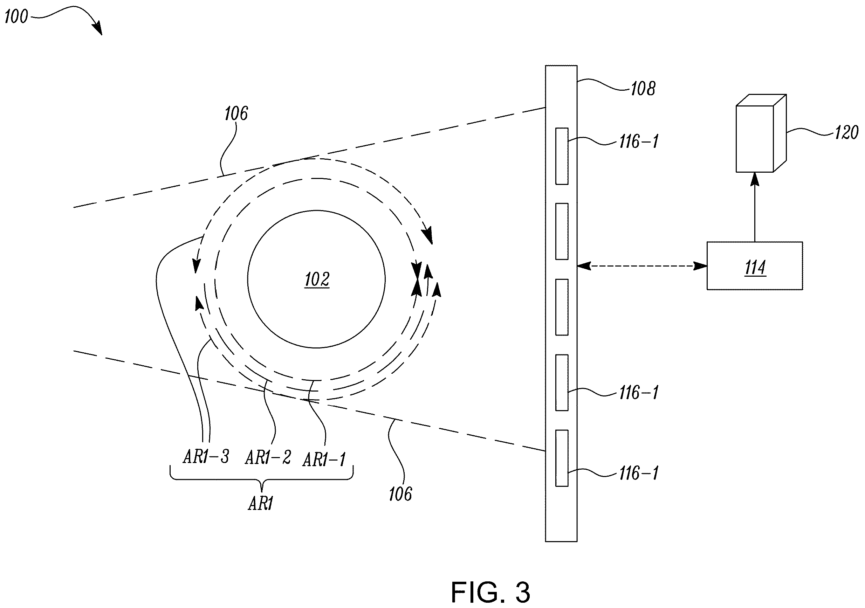

**FIG. 3** is a schematic view of the scanning apparatus 100 illustrating collection of first projections 116-1 from the plurality of projections 116 in an exemplary at least one first angular range AR1, in accordance with an embodiment of the present invention. Some components of the scanning apparatus 100 are not shown in FIG. 3 for illustrative purposes.

The processor 114 is further configured to perform a reconstruction of the first projections 116-1 to obtain a first three-dimensional image 120 (shown as a cuboid) of the component 102. As shown, the first projections 116-1 are acquired in the at least one first angular range AR1 of the rotation and/or revolution. In some embodiments, the at least one first angular range AR1 includes a single first angular range (shown as AR1-1, AR1-2) or two or more first angular ranges (shown as AR1-3) separated from one another. In some embodiments, the single first angular range AR1 is 180 degrees (shown as AR1-2) or 270 degrees or 360 degrees (shown as AR1-1).

In case of the first angular range AR1 being 360 degrees, the first projections 116-1 are collected from all possible angles, thereby providing a detailed and complete information of the component 102 which may make the scanning more reliable. A 360 degrees first angular range may provide the kind of first projections 116-1 that have the highest probability of capturing the grain boundary in the component 102. Further, in case of the first angular range AR1 being 180 degrees or 270 degrees the scanning time may be significantly reduced, which makes the scanning process more efficient.

Further, in some embodiments, the first projections 116-1 are acquired at uniformly separated angles within the at least one first angular range AR1. In other embodiments, the first projections 116-1 are acquired at non-uniformly separated angles within the at least one first angular range AR1. It depends on application requirements that whether the first projections 116-1 will be acquired at uniformly separated angles or non-uniformly separated angles within the at least one first angular range AR1.

Further, every two adjacent angles in the at least one first angular range AR1 are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees. In some embodiments, the two adjacent angles in the at least one first angular range AR1 may be separated by as low as 0.036 degrees.

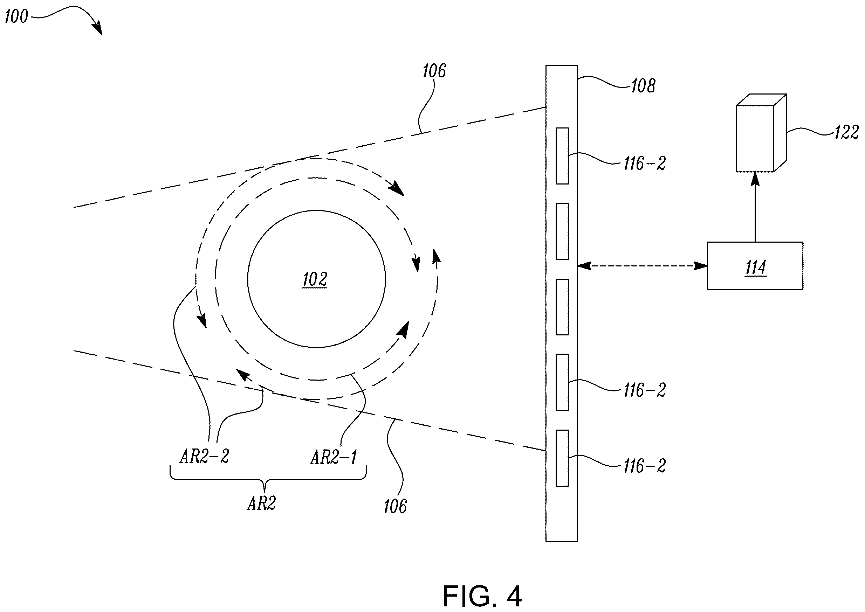

**FIG. 4** is a schematic view of the scanning apparatus 100 illustrating collection of second projections 116-2 from the plurality of projections 116 in an exemplary at least one second angular range AR2, in accordance with an embodiment of the present invention. Some components of the scanning apparatus 100 are not shown in FIG. 4 for illustrative purposes.

The processor 114 is further configured to perform a reconstruction of the second projections 116-2 to obtain a second three-dimensional image 122 (shown as a cuboid) of the component 102. The second projections 116-2 are acquired in the at least one second angular range AR2 of the rotation and/or revolution. The at least one second angular range AR2 is different from the at least one first angular range AR1. In some embodiments, the at least one second angular range AR2 includes a single second angular range (shown as AR2-1) or two or more second angular ranges (shown as AR2-2) separated from one another.

Further, in some embodiments, the second projections 116-2 are acquired at uniformly separated angles within the at least one second angular range AR2. In other embodiments, the second projections 116-2 are acquired at non-uniformly separated angles within the at least one second angular range AR2. It depends on application requirements that whether the second projections 116-2 will be acquired at uniformly separated angles or non-uniformly separated angles within the at least one second angular range AR2.

Further, every two adjacent angles in the at least one second angular range AR2 are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees. In some embodiments, the two adjacent angles in the at least one second angular range AR2 of rotation and/or revolution may be separated by as low as 0.036 degrees.

It should be noted that the processor 114 may be configured to perform reconstruction of the first projections 116-1 and reconstruction of the second projections 116-2 by performing a filtered back projection reconstruction algorithm, an FDK reconstruction algorithm, an iterative reconstruction algorithm, a weighting reconstruction algorithm, or a combination thereof on the respective first projections 116-1 and the second projections 116-2. The FDK reconstruction, typically described as Feldkamp-Davis-Kress algorithm is a widely used filtered-back projection (FBP) algorithm for 3D image reconstruction from circular cone-beam projections. The FDK reconstruction algorithm is developed by Feldkamp-Davis-Kress and by far the most popular due to its structure of back projection which gives exact reconstruction of the image. The FDK algorithm is almost same as the fan-beam algorithm, except that the back-projection is a cone-beam back projection. In the FDK reconstruction algorithm, the ramp filtering is performed in the row-by-row fashion. Moreover, in the FDK reconstruction algorithm it may be possible to propose and apply different filters in the algorithm to get a high-quality image with fast implementation.

Referring to FIGS. 2 to 4, the processor 114 is further configured to compare the first three-dimensional image 120 and the at least one second three-dimensional image 122 with one another. Moreover, the processor 114 is further configured to determine, based on the comparison, the grain structure in the component 102. In other words, the processor 114 determines the difference in grain orientation in the component 102 based on the comparison of the first three-dimensional image 120 and the at least one second three-dimensional image 122.

As the processor 114 performs reconstruction of the first projections 116-1 and the reconstruction of the second projections 116-2 in the different angular ranges (i.e., the at least first angular range AR1 and the at least second angular range AR2) of rotation and/or revolution, there would be a difference in intensity of scan (i.e., image) obtained because of variation in imaging beam attenuation due to grain orientation. Therefore, by comparing the first three-dimensional image 120 and the at least one second three-dimensional image 122, the difference in the intensity of the scan (i.e., scan quality) is analysed. This difference in intensity of the scan may appear as a difference in material density of the component 102 as the difference in projection intensity will depend on the materials since the scan parameters are same. Accordingly, variation in grain boundary/orientation may be identified. This may enable the scanning apparatus 100 to provide a detailed information about the grain structure of the component 102, thereby enabling a precise measurement of relative orientation of grains within the component 102. Hence, the scanning apparatus 100 may facilitate a non-destructive imaging of the grain structure in the component 102.

The processor 114 may determine presence of materials of different densities based on the difference in grain orientation in the component 102. In other words, a difference in contrast may be provided between the differently oriented grains, which denotes the difference in grain orientation in the component 102. Therefore, the scanning apparatus 100 may help in identifying a variation in material densities, which may enable identification of grain boundaries and quantification of the grain orientation differences within the component 102.

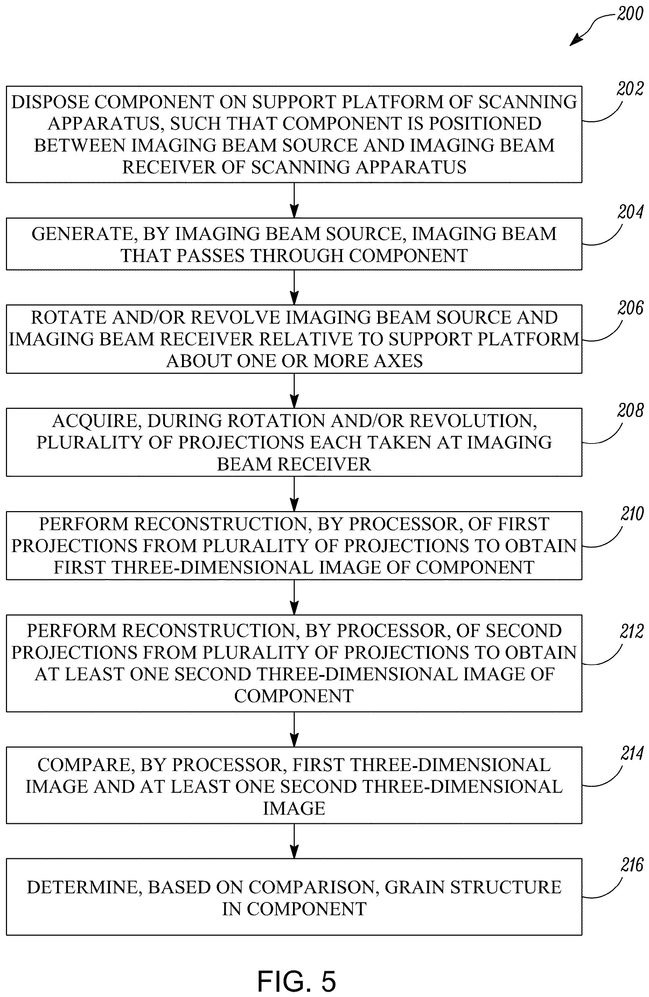

**FIG. 5** is a flowchart of a method 200 for determining the grain structure in the component 102 by scanning the component 102 in the scanning apparatus 100 shown in FIGS. 2 to 4, according to an embodiment of the present invention. The method 200 may be at least partly performed by the scanning apparatus 100. Referring to FIGS. 2 to 5, at step 202, the method 200 includes disposing the component 102 on the support platform 110 (shown in FIG. 2) of the scanning apparatus 100, such that the component 102 is positioned between the imaging beam source 104 and the imaging beam receiver 108 of the scanning apparatus 100. The imaging beam source 104 and the imaging beam receiver 108 are oppositely disposed to either side of the support platform 110.

At step 204, the method 200 further includes generating, by the imaging beam source 104, the imaging beam 106 that passes through the component 102. In some embodiments, generating the imaging beam 106 further includes generating, by the imaging beam source 104, the x-ray beam, the gamma-ray beam, or any electromagnetic beam that is capable of passing through the component 102. At step 206, the method 200 further includes rotating and/or revolving the imaging beam source 104 and the imaging beam receiver 108 relative to the support platform 110 about one or more axes.

At step 208, the method 200 further includes acquiring, during the rotation and/or revolution, the plurality of projections 116 each taken at the imaging beam receiver 108. In some embodiments, collecting the plurality of projections 116 further includes collecting data samples of imaging beam attenuation by the component 102.

At step 210, the method 200 further includes performing reconstruction, by the processor 114, of the first projections 116-1 from the plurality of projections 116 to obtain the first three-dimensional image 120 of the component 102. The first projections 116-1 are acquired in the at least one first angular range AR1 of the rotation and/or revolution.

At step 212, the method 200 further includes performing reconstruction, by the processor 114, of the second projections 116-2 from the plurality of projections 116 to obtain the at least one second three-dimensional image 122 of the component 102. The second projections 116-2 are acquired in the at least one second angular range AR2 of the rotation and/or revolution. The at least one second angular range AR2 is different from the at least one first angular range AR1.

Moreover, it should be noted that, performing reconstruction of the first projections 116-1 and reconstruction of the second projections 116-2 further include performing a filtered back projection reconstruction algorithm, an FDK reconstruction algorithm, an iterative reconstruction algorithm, a weighting reconstruction algorithm, or a combination thereof on the respective first projections 116-1 and the second projections 116-2.

At step 214, the method 200 further includes comparing, by the processor 114, the first three-dimensional image 120 and the at least one second three-dimensional image 122 with one another. At step 216, the method 200 further includes determining, based on the comparison, the grain structure in the component 102. In some embodiments, determining the grain structure in the component 102 includes determining the difference in grain orientation in the component 102.

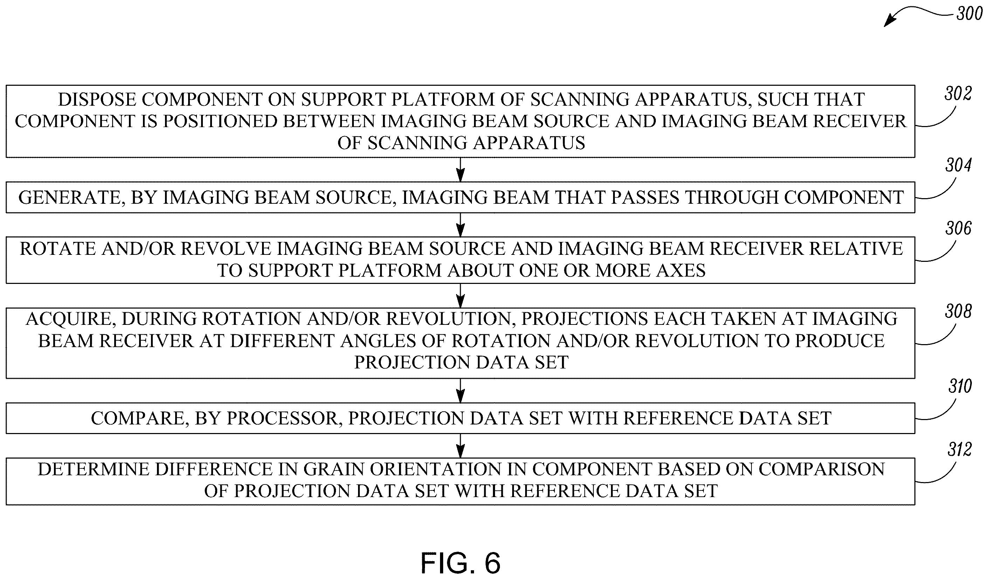

**FIG. 6** is a flowchart of a method 300 for determining the difference in grain orientation in the component 102 (shown in FIG. 2) by scanning the component 102 in the scanning apparatus 100 (shown in FIG. 2), according to another embodiment of the present invention. The method 300 may be at least partly performed by the scanning apparatus 100. Referring to FIGS. 2 and 6, at step 302, the method 300 includes disposing the component 102 on the support platform 110 of the scanning apparatus 100 (shown in FIG. 2), such that the component 102 is positioned between the imaging beam source 104 and the imaging beam receiver 108 of the scanning apparatus 100. The imaging beam source 104 and the imaging beam receiver 108 are oppositely disposed to either side of the support platform 110.

At step 304, the method 300 further includes generating, by the imaging beam source 104, the imaging beam 106 that passes through the component 102. At step 306, the method 200 further includes rotating and/or revolving the imaging beam source 104 and the imaging beam receiver 108 relative to the support platform 110 about one or more axes. At step 306, the method 300 further includes acquiring, during the rotation and/or revolution, the plurality of projections 116 each taken at the imaging beam receiver 108 at different angles of rotation and/or revolution to produce a projection data set. The projection data set includes collected data samples of imaging beam attenuation by the component 102.

At step 308, the method 300 further includes comparing, by the processor 114, the projection data set with a reference data set. The reference data set includes reference data samples of imaging beam attenuation by the component 102. In other words, a reference sample includes an imaging beam attenuation of a component having a known grain orientation. The imaging beam attenuation of the component is acquired and saved as the reference data set. In some embodiments, the reference data set is previously stored in a memory of the processor 114. It should be noted that the memory may be RAM or other volatile or non-volatile memory, a non-transitory memory or a data storage device, such as a hard disk drive, a solid-state disk drive, a hybrid disk drive, or other appropriate data storage, and may further store machine-readable instructions. The memory may be connected to the processor 114. At step 310, the method 300 further includes determining the difference in grain orientation in the component 102 based on the comparison of the projection data set with the reference data set.

By comparing the collected data samples of imaging beam attenuation with the reference data samples of imaging beam attenuation by the component 102, the method 300 of the present invention may enable detection of difference in imaging beam attenuation caused by variation in material density in the component 102. Accordingly, variation in grain boundary/orientation may be identified. This may eliminate a need of performing reconstruction of various projections of the component 102 to generate a three-dimensional image of the component 102, thereby making the process simpler and faster by reducing computational complexity.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (200) for determining grain structure in a component (102) by scanning the component (102) in a scanning apparatus (100), the method (200) comprising the steps of:
disposing the component (102) on a support platform (110) of the scanning apparatus (100), such that the component (102) is positioned between an imaging beam source (104) and an imaging beam receiver (108) of the scanning apparatus (100), wherein the imaging beam source (104) and the imaging beam receiver (108) are oppositely disposed to either side of the support platform (110);
generating, by the imaging beam source (104), an imaging beam (106) that passes through the component (102);
rotating and/or revolving the imaging beam source (104) and the imaging beam receiver (108) relative to the support platform (110) about one or more axes;
acquiring, during the rotation and/or revolution, a plurality of projections (116) each taken at the imaging beam receiver (108);
performing reconstruction, by a processor (114), of first projections (116-1) from the plurality of projections (116) to obtain a first three-dimensional image (120) of the component (102), the first projections (116-1) being acquired in at least one first angular range (AR1) of the rotation and/or revolution;
performing reconstruction, by the processor (114), of second projections (116-2) from the plurality of projections (116) to obtain at least one second three-dimensional image (122) of the component (102), the second projections (116-2) being acquired in at least one second angular range (AR2) of the rotation and/or revolution, wherein the at least one second angular range (AR2) is different from the at least one first angular range (AR1);
comparing, by the processor (114), the first three-dimensional image (120) and the at least one second three-dimensional image (122); and
determining, based on the comparison, the grain structure in the component (102).

2. The method (200) of claim 1, wherein determining the grain structure in the component (102) comprises determining a difference in grain orientation in the component (102).

3. The method (200) of claim 1 or 2, wherein the first projections (116-1) are acquired at uniformly separated angles within the at least one first angular range (AR1).

4. The method (200) of claim 1 or 2, wherein the first projections (116-1) are acquired at non-uniformly separated angles within the at least one first angular range (AR1).

5. The method (200) of any one of claims 1 to 3, wherein every two adjacent angles in the at least one first angular range (AR1) are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees.

6. The method (200) of any preceding claim, wherein the second projections (116-2) are acquired at uniformly separated angles within the at least one second angular range (AR2), or the second projections (116-2) are acquired at non-uniformly separated angles within the at least one second angular range (AR2).

7. The method (200) of any one of claims 1 to 5, wherein every two adjacent angles in the at least one second angular range (AR2) are separated by at least 1 degree, at least 5 degrees, at least 10 degrees, at least 20 degrees, at least 30 degrees, at least 45 degrees, at least 60 degrees, at least 90 degrees, at least 120 degrees, at least 135 degrees, or at least 150 degrees.

8. The method (200) of any preceding claim, wherein acquiring the plurality of projections (116) further comprises collecting data samples of imaging beam attenuation by the component (102).

9. The method (200) of any preceding claim, wherein performing reconstruction of the first projections (116-1) and reconstruction of the second projections (116-2) further comprise performing a filtered back projection reconstruction algorithm, an FDK reconstruction algorithm, an iterative reconstruction algorithm, a weighting reconstruction algorithm, or a combination thereof on the respective first projections (116-1) and the second projections (116-2).

10. The method (200) of any preceding claim, wherein the at least one first angular range (AR1) comprises a single first angular range or two or more first angular ranges separated from one another, optionally the single first angular range being 180 degrees or 270 degrees or 360 degrees.

11. The method (200) of any preceding claim, wherein the at least one second angular range (AR2) comprises a single second angular range or two or more second angular ranges separated from one another.

12. The method (200) of any preceding claim, wherein generating the imaging beam (106) further comprises generating, by the imaging beam source (104), an x-ray beam, a gamma-ray beam, or any electromagnetic beam that is capable of passing through the component (102).

13. A scanning apparatus (100) for determining grain structure in a component (102), the scanning apparatus (100) comprising:
an imaging beam source (104) configured to generate an imaging beam (106) that passes through the component (102);
an imaging beam receiver (108) configured to receive the imaging beam (106), such that the component (102) is disposed between the imaging beam source (104) and the imaging beam receiver (108), wherein the imaging beam receiver (108) is configured to generate one or more images (112) in response to receiving the imaging beam (106);
a support platform (110) configured to support the component (102), wherein the imaging beam source (104) and the imaging beam receiver (108) are configured to rotate and/or revolve relative to the support platform (110) about one or more axes to allow generation of the one or more images (112); and
a processor (114) communicably coupled to the imaging beam receiver (108) and configured to:
acquire, during the rotation and/or revolution, a plurality of projections (116) each taken at the imaging beam receiver (108);
perform reconstruction of first projections (116-1) from the plurality of projections (116) to obtain a first three-dimensional image (120) of the component (102), the first projections (116-1) being acquired in at least one first angular range (AR1) of the rotation and/or revolution;
perform reconstruction of second projections (116-2) from the plurality of projections (116) to obtain at least one second three-dimensional image (122) of the component (102), the second projections (116-2) being acquired in at least one second angular range (AR2) of the rotation and/or revolution, wherein the at least one second angular range (AR2) is different from the at least one first angular range (AR1);
compare the first three-dimensional image (120) and the at least one second three-dimensional image (122); and
determine, based on the comparison, the grain structure in the component (102).

14. The scanning apparatus (100) of claim 13, wherein the processor (114) is further configured to determine the difference in grain orientation in the component (102) based on the grain structure in the component (102).

15. The scanning apparatus (100) of claims 13 or 14, wherein the at least one first angular range (AR1) comprises a single first angular range or two or more first angular ranges separated from one another, optionally the single first angular range being 180 degrees or 270 degrees or 360 degrees.
